# EUROPÄISCHE PATENTANMELDUNG

(11) **EP 2 874 267 A1**
(43) Veröffentlichungstag der Anmeldung: **20.05.2015**
(21) Anmeldenummer: 13193232.9
(22) Anmeldetag: 18.11.2013
(51) Int. Cl.: H02J 7/00

(54) **Ladegerätsteuerung durch Akku**

(71) Anmelder: HILTI Aktiengesellschaft, 9494 Schaan (LI)
(72) Erfinder: Hauser, Klaus, 86830 Schwabmünchen (DE); Beckert, Benedikt, 86159 Augsburg (DE)
(74) Vertreter: Hilti Aktiengesellschaft Corporate Intellectual Property

(57) **Zusammenfassung**

Verfahren zum Steuern eines Ladevorgangs in einem System enthaltend einen Akkumulator und ein Ladegerät mit dem Schrittverfahrens Senden eines Steuersignals von dem Akkumulator an das mit dem Akkumulator verbindbare Ladegerät zum Anpassen wenigstens eines Ladeparameters des Ladegeräts.

## Beschreibung

Die vorliegende Erfindung betrifft ein Verfahren zum Steuern eines Ladevorgangs in einem System enthaltend einen Akkumulator und ein Ladegerät.

Zum Laden eines Akkumulators wird dieser an ein Ladegerät verbunden, damit der Akkumulator wieder mit elektrischem Strom bzw. elektrischer Spannung zur Speicherung im Akkumulator versorgt werden kann.

Bei bisher bekannten Systemen aus Akkumulator und Ladegerät erfolgt das Bereitstellen des Stroms bzw. der Spannung von dem Ladegerät an den Akkumulator mit Hilfe von sogenannten Kennlinien, die auf Tabellen im Ladegerät, d.h. auf einer Steuereinheit im Ladegerät, abgelegt sind. Anhand dieser Tabellen und einer entsprechenden Kennung des angeschlossenen Akkumulators ist das Ladegerät im Stande die passenden Werte, d.h. Größe, Zeitdauer, etc., für den Strom bzw. die Spannung an den angeschlossenen Akkumulator zu liefern.

Ein derartiges System bestehend aus Akkumulator und dazugehörigen Ladegerät ist durch die deutsche Offenlegungsschrift DE 10 2010 041 510 offenbart. Dieses Dokument des Stands der Technik zeigt ein elektrisches Energiespeichersystem umfasst einen aufladbaren Akkumulator und ein Aufladegerät zum Aufladen des Akkumulators. Dabei umfasst der Akkumulator einen Informationsspeicher mit Aufladeinformationen, die unterschiedlichen Aufladearten zugeordnet sind, und das Aufladegerät ist dazu ausgebildet, ein Aufladen des Akkumulators nach einer der Aufladearten in Abhängigkeit der zugeordneten Aufladeinformationen des Informationsspeichers zu steuern.

Nachteilig an den bereits bestehenden Systemen aus Akkumulator und Ladegerät ist jedoch, dass, wie entsprechend in DE 10 2010 041 510 offenbart, ein Anwender des Systems auf eine begrenzte Auswahl an vorbestimmten Ladevorgänge bzw. Laderoutinen festgelegt ist, die in dem Akkumulator gespeichert sind, um den gesamten Ladevorgang einzustellen. Hierdurch besteht nur geringer Grad an Flexibilität zum Laden des Akkumulators.

Darüber hinaus ist an den bestehenden Systemen aus Akkumulator und Ladegerät problematisch, dass ältere Ladegeräte neuere Akkumulatoren mit neuen und wesentlich komplexeren Ladevorgängen und -algorithmen überhaupt nicht mehr oder nur noch mit einem erheblichen technischen Aufwand laden können.

Es ist daher Aufgabe der vorliegenden Erfindung eine verbessertes Verfahren zum Steuern eines Ladevorgangs in einem System enthaltend einen Akkumulator und ein Ladegerät bereitzustellen, durch welche die oben genannten Probleme beseitigt werden und ein effizienterer Ladevorgang ermöglicht werden wird.

Die vorstehend genannte Aufgabe wird durch den erfindungsgemässen Gegenstand des unabhängigen Anspruchs 1 gelöst. Weitere vorteilhafte Ausgestaltungen der vorliegenden Erfindung sind in den abhängigen Ansprüchen beschrieben.

Demnach wird ein Verfahren bereitgestellt zum Steuern eines Ladevorgangs in einem System enthaltend einen Akkumulator und ein Ladegerät.

Erfindungsgemäss ist ein Senden eines Steuersignals von dem Akkumulator an das mit dem Akkumulator verbindbare Ladegerät zum Anpassen wenigstens eines Ladeparameters des Ladegeräts vorgesehen. Hierdurch wird ein effizientes Steuern des Ladevorgangs durch das situationsadäquate Einstellen wenigstens eines Ladeparameters von Seiten des Akkumulators erreicht. Bei dem anzupassenden Ladeparameter kann es sich unter anderem um den Ladestrom oder die Ladespannung handeln.

Gemäss einer weiteren vorteilhaften Ausgestaltungsform der vorliegenden Erfindung kann vorgesehen sein, dass die Anpassung des wenigstens einen Ladeparameters entsprechend wenigstens einer im Akkumulator gespeicherten Laderoutine erfolgt. Die Laderoutine enthält dabei im Wesentlichen Kennlinien wie z.B. eine im Akkumulator abgelegte Strom-SpannungsKennlinie. Mit Hilfe der Laderoutine ist der Akkumulator in der Lage den Ladevorgang zu überprüfen und ggf. bei Abweichungen von der Laderoutine bzw. von einer Kennlinie den Ladestrom und/oder die Ladespannung entsprechend zu verändern. Hierbei ist es sogar auch möglich, dass der Akkumulator bei einer bestimmten Abweichung von der Laderoutine bzw. von einer Kennlinie den Ladevorgang vollständig unterbricht.

Um auf die Einflüsse der Temperatur des Akkumulators bei einem Ladevorgang bzw. bei der Laderoutine entsprechend und situationsadäquat reagieren zu können, kann es vorteilhaft sein, dass die Anpassung des wenigstens einen Ladeparameters in Abhängigkeit zu wenigstens einem Temperaturwert des Akkumulators erfolgt. Dementsprechend kann bei einer niedrigen Temperatur des Akkumulators der Wert des wenigstens einen Ladeparameters reduziert werden. Somit liegt beispielsweise ein niedriger Ladestrom an dem Akkumulator, wenn die Temperatur des Akkumulators entsprechend niedrig ist.

Entsprechend einer weiteren vorteilhaften Ausgestaltungsform der vorliegenden Erfindung kann vorgesehen sein, dass das Senden des Steuersignals zum Anpassen des wenigstens einen Ladeparameters des Ladegeräts in regelmässigen zeitlichen Abständen erfolgt. Hierdurch kann sichergestellt werden, dass das situationsadäquate Einstellen wenigstens eines Ladeparameters von Seiten des Akkumulators zur effizienten Steuerung des Ladevorgangs regelmässig erfolgt und somit (wenn notwendig) ständig angepasst werden kann. Alternativ ist es jedoch auch möglich, dass das Anpassen des wenigstens einen Ladeparameters des Ladegeräts nicht in regelmässigen zeitlichen Abständen, sondern in unregelmässigen Abständen, d.h. aufgrund situationsbedingter Notwendigkeiten erfolgt. Derartige situationsbedingte Notwendigkeiten können beispielsweise sich kündigende (d.h. einem Trend folgende) oder auch plötzlich auftretende Notfälle in Form einer Überhitzung oder übermässig starken Abkühlung des Akkumulators sein.

Damit auf die Einflüsse der Temperatur des Akkumulators bei einem Ladevorgang entsprechend und situationsadäquat reagieren werden kann, ist es möglich, dass die Länge der zeitlichen Abstände in Abhängigkeit zu wenigstens einem Temperaturwert des Akkumulators erfolgt. Hierdurch ist es möglich, dass die Länge der zeitlichen Abstände in kritischen Temperaturbereichen, d.h. bei sehr tiefen oder sehr hohen Temperaturen, verkleinert oder vergrössert wird.

Die vorliegende Erfindung wird bezüglich vorteilhafter Ausführungsbeispiele näher erläutert, hierbei zeigt
- Fig. 1: ein System enthaltend einen Akkumulator und ein Ladegerät zur Anwendung des erfindungsgemässen Verfahrens, und
- Fig. 2: eine Darstellung eines Ladeprofils mit dem Ladestrom in Abhängigkeit zu der Akkumulator-Temperatur.

### AUSFÜHRUNGSBEISPIELE

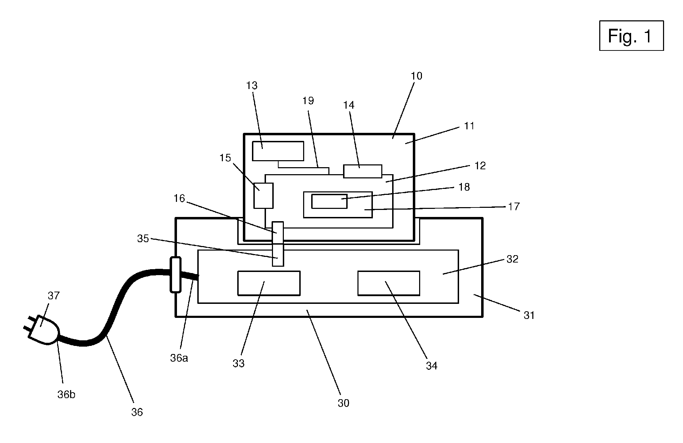

Fig. 1 zeigt ein System 1, welches einen Akkumulator 10 und ein Ladegerät 30 enthält.

Der Akkumulator 10 enthält dazu ein Gehäuse 11, eine Steuereinheit 12, einen Temperatursensor 13, einen Spannungssensor 14, einen Stromsensor 15 und eine Schnittstelle 16 zu dem Ladegerät 30.

Die Steuereinheit 12 des Akkumulators 10 ist in dem Gehäuse 11 des Akkumulators 10 positioniert und enthält wiederum einen Mikroprozessor 17 sowie eine Speichereinheit 18. Auf der Speichereinheit 18 ist eine für den Akkumulator 10 spezifische Laderoutine abgelegt. Die Laderoutine enthält dabei Kennlinien, wie z.B. eine Strom-Spannungs-Kennlinie. Darüber hinaus enthält die Speichereinheit 18 auch noch ein Kennlinienfeld, bei dem wenigstens ein Temperaturwert des Akkumulators 10 als Parameter zu der Strom-Spannungs-Kennlinie hinzugenommen ist. Hierdurch sind im Akkumulator 10 verschiedene temperaturrelevante Ladevorgänge bzw. Laderoutinen gespeichert.

Der Mikroprozessor 17 zusammen mit dem Spannungssensor 14 und dem Stromsensor 15 dienen zur Bearbeitung bzw. zur Überwachung des Ladevorgangs. Der Spannungssensor 14 dient insbesondere zur Überwachung der von dem Ladegerät 30 gesendeten Ladespannung. Der Stromsensor 15 dient insbesondere zur Überwachung des von dem Ladegerät 30 gesendeten Ladestroms.

Über die als elektrischer Kontakt ausgestaltete Schnittstelle 16, die eine wiederlösbare Verbindung zwischen dem Akkumulator 10 und den Ladegerät 30 darstellt, sendet die Steuereinheit 12 Steuersignale an das Ladegerät 30. Mittels dieser Steuersignale werden Anweisungen an das Ladegerät 30 übermittelt zur temperaturbedingten Anpassung wenigstens eines Ladeparameters. Der Ladeparameter ist beispielsweise der Ladestrom oder die Ladespannung.

Der Temperatursensor 13 ist in dem Gehäuse 11 des Akkumulators 10 positioniert und misst die Temperatur des Akkumulators 10. Der Temperatursensor 13 ist über eine Verbindungsleitung 19 mit der Steuereinheit 12 verbunden. Die an die Steuereinheit 12 übermittelten Temperaturwerte dienen zur Auswahl der situationsadäquaten Laderoutine. Hierbei wird der jeweils gemessene Temperaturwert der entsprechenden auf der Steuereinheit 12 gespeicherten Strom-SpannungsKennlinie zugeordnet, um somit den zur jeweiligen Temperatur des Akkumulators 10 passenden Ladestrom bzw. die passende Ladespannung hierzu auszuwählen und vom Ladegerät 30 anzufordern.

Das Ladegerät 30 enthält ein Gehäuse 31, in dem ein Laderegler 32 mit einem Stromregler 33 und einem Spannungsregler 34 positioniert sind. Der Stromregler 33 dient zur Bereitstellung eines Ladestroms und der Spannungsregler 34 dient zur Bereitstellung einer Ladespannung. Der Spannungsregler 34 und auch der Stromregler 33 dienen bei einem Feststrom als Spannungs- bzw. Strombegrenzer.

Das Gehäuse 31 des Ladegeräts 30 enthält des Weiteren eine Schnittstelle 35 zu dem Akkumulator 10 sowie ein Netzkabel 36 mit einem ersten Ende 36a und einem zweiten Ende 36b. Das erste Ende 36a des Netzkabels 36 ist durch das Gehäuse 31 des Ladegeräts 30 mit dem Laderegler 32 verbunden. Das zweite Ende 36b des Netzkabels 36 weist einen Anschluss 37 für eine nicht gezeigte Netzstromquelle auf.

Wie in Fig. 1 ebenfalls dargestellt, ist der Akkumulator 10 wiederlösbar so mit dem Ladegerät 30 verbunden, dass die Schnittstelle 16 des Akkumulators 10 mit der Schnittstelle 35 des Ladegeräts 30 in Verbindung steht. Über diese Verbindung werden Informationssignale sowie Ladeparameter in Form von Ladestrom und Ladespannung zwischen dem Akkumulator 10 und dem Ladegerät 30 ausgetauscht.

Der Akkumulator 10 ist zur Anwendung des erfindungsgemässen Verfahrens so ausgelegt, dass dieser den Ladevorgang primär selbständig überwacht, steuert und regelt. Das Ladegerät 30 fungiert dabei im Wesentlichen lediglich als reiner Befehlsempfänger, der den Vorgaben des Akkumulators 10 entsprechend einen Ladestrom an den Akkumulator 10 ausgibt bzw. eine Ladespannung an den Akkumulator 10 anlegt.

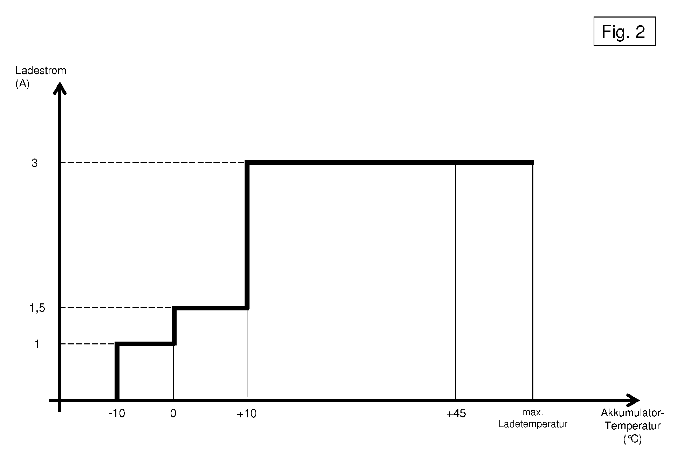

Wie in Fig. 2 dargestellt, ist der Akkumulator 10 in der Lage den Ladestrom an den jeweiligen Temperaturwert anzugleichen, d.h. bei einer Temperatur des Akkumulators 10 von -10° bis 0°C liegt ein Ladestrom von 2A an. Ein einem Temperaturbereich von 0° bis +10°C beträgt der Ladestrom 1,5A. Wenn die Akkumulator-Temperatur in einem Bereich zwischen +10° bis +45°C liegt, beträgt der Ladestrom 3A.

Hierzu überwacht die Steuereinheit 12 des Akkumulators 10 in regelmässigen zeitlichen Abständen den Ladevorgang mit der auf der Steuereinheit 12 abgelegten und ausgewählten Laderoutine. Wie bereits vorstehend beschrieben, werden dabei auch die von dem Temperatursensor 13 gemessenen Temperaturwerte hinzugezogen, um die geeignete Laderoutine zu der jeweils gemessenen Temperatur des Akkumulators 10 zu wählen. Hierzu vergleicht die Steuereinheit 12 in Bezug auf die derzeitig gemessene Akkumulator-Temperatur den von dem Ladegerät 30 gesendeten Ladestrom bzw. die vom Ladegerät 30 gesendete Ladespannung mit den entsprechenden zur Laderoutine gehörenden Kennlinien. Bei einer bestimmten Abweichung des Ladestroms bzw. der Ladespannung von der jeweiligen Kennlinie greift die Steuereinheit 12 regulierend in den Ladevorgang ein, indem die Steuereinheit 12 über die Schnittstelle 16 zu dem Ladegerät 30 einen geänderte Ladestrom bzw. eine geänderte Ladespannung anfordert. Bei dem geänderten Ladestrom bzw. bei der geänderten Ladespannung handelt es sich dann um den Ladestrom bzw. die Ladespannung die gemäss hinterlegten temperaturrelevanten Kennlinien korrekt sind.

Wie ebenfalls vorstehend beschrieben, dienen der Spannungsregler 34 und der Stromregler 33 des Ladegeräts 30 jeweils als Spannungs- bzw. Strombegrenzer. Bei der Anforderung eines bestimmten Ladestroms oder einer Ladespannung von dem Akkumulator 10 interpretiert das Ladegerät 30 das hierzu vom Akkumulator 10 gesendete Steuersignal und schickt dann die jeweilige Ladespannung bzw. Ladestrom. Der als Spannungs- bzw. Strombegrenzer fungierende Spannungsregler 34 bzw. Stromregler 33 des Ladegeräts 30 überwacht somit, dass die korrekte Ladespannung bzw. Ladestrom an den Akkumulator 10 gesendet wird.

Darüber hinaus sendet das Ladegerät 30 ein entsprechendes Messsignal zur Kontrolle an den Akkumulator 10, um den Akkumulator 10 frühzeitig auf einen relativ hohen Ladespannung bzw. einen relativ hohen Ladestrom in Kenntnis zu setzen zu warnen. Mit Hilfe dieses vom Ladegerät 30 gesendeten Messsignals ist der Akkumulator 10 in der Lage Fehler bei dem Anforderung einer passenden Ladespannung bzw. eines passenden Ladestroms zu erkennen und ggf. zu korrigieren. Ein derartiger Fehler kann beispielsweise darin bestehen, dass ein wesentlich zu hoher Ladestrom vom Akkumulator 10 angefordert wird oder einem atypischen Verlust. Mit Hilfe des im Akkumulator 10 positionierten Spannungssensors 14 und Stromsensors 15 kann der Akkumulator 10 einen Vergleichswert zu der angeforderten Ladespannung bzw. zu dem angeforderten Ladestrom messen und bei einer entsprechenden Abweichung eine erneute Anpassung oder auch ggf. eine vollständige Unterbrechung des Ladevorgangs bewirken.

## Patentansprüche

1. Verfahren zum Steuern eines Ladevorgangs in einem System (1) enthaltend einen Akkumulator (10) und ein Ladegerät (30)
**gekennzeichnet durch** Senden eines Steuersignals von dem Akkumulator (10) an das mit dem Akkumulator (10) verbindbare Ladegerät (30) zum Anpassen wenigstens eines Ladeparameters des Ladegeräts (30).

2. Verfahren nach Anspruch 1,
**dadurch gekennzeichnet, dass** die Anpassung des wenigstens einen Ladeparameters entsprechend wenigstens einer im Akkumulator (10) gespeicherten Laderoutine erfolgt.

3. Verfahren nach Anspruch 1 oder 2,
**dadurch gekennzeichnet, dass** die Anpassung des wenigstens einen Ladeparameters in Abhängigkeit zu wenigstens einem Temperaturwert des Akkumulators (10) erfolgt.

4. Verfahren nach wenigstens einem der Ansprüche 1 bis 3,
**dadurch gekennzeichnet, dass** das Senden des Steuersignals zum Anpassen des wenigstens einen Ladeparameters des Ladegeräts (30) in regelmässigen zeitlichen Abständen erfolgt.

5. Verfahren nach Anspruch 4,
**dadurch gekennzeichnet, dass** die Länge der zeitlichen Abstände in Abhängigkeit zu wenigstens einem Temperaturwert des Akkumulators (10) erfolgt.
